# EUROPÄISCHE PATENTANMELDUNG

(11) **EP 1 424 861 A1**
(43) Veröffentlichungstag der Anmeldung: **02.06.2004**
(21) Anmeldenummer: 02026271.3
(22) Anmeldetag: 26.11.2002
(51) Int. Cl.: H04Q 7/30, G07C 9/00, G07F 7/10, H04Q 7/34

(54) **Verfahren und Vorrichtung zur Identifizierung eines Benutzers mittels eines mobilen Endgerätes**

(71) Anmelder: SIEMENS AKTIENGESELLSCHAFT, 80333 München (DE)
(72) Erfinder: Vindeby, Per, 81739 München (DE)

(57) **Zusammenfassung**

Verfahren und Vorrichtung zur Identifizierung eines Benutzers mittels eines mobilen Endgerätes, das für den Benutzer einfach und bequem durchzuführen ist und darüber hinaus eine Verknüpfung mit anderen, mittels bekannter Verfahren durchgeführten, Identifizierungen des Benutzers gestattet, bei dem das Endgerät durch ein Lesegerät von Mobilfunknetzen, die in der Umgebung des Lesegerätes verfügbar sind, abgeschirmt wird, das Lesegerät eine Basisstation eines Mobilfunknetzes gegenüber dem Endgerät emuliert und das Endgerät eine Benutzerkennung an das Lesegerät übermittelt.

## Beschreibung

Die Erfindung betrifft Verfahren und Vorrichtung zur Identifizierung eines Benutzers mittels eines mobilen Endgerätes.

Waren oder Dienstleistungen können auf direktem Wege in Anspruch genommen werden, indem sich der Interessent oder potentielle Benutzer einer Ware oder einer Dienstleistung vor Ort ("On-Site") zu einem Verkäufer oder einem Anbieter begibt. Bei sofortiger Bezahlung mit Bargeld ist hierbei häufig keine Identifizierung, d.h. Kenntlichmachung des Interessenten oder Benutzers für weitere oder spätere Vorgänge, erforderlich. Weiterhin können Bestellvorgänge auch telefonisch durchgeführt werden, wobei sich der Benutzer zweckmäßigerweise durch Angabe etwa seiner Telefonnummer und/oder Postanschrift identifizieren muss.

In jüngerer Zeit werden Bestellvorgänge immer häufiger auf elektronischem Wege, etwa über Webseiten im Internet oder Emails, durchgeführt. Hierbei ist es nicht erforderlich, nicht bequem und teilweise auch gar nicht praktikabel, dass der Benutzer vor Ort beim Anbieter erscheint; er bestellt also "Off-Site". Zur Bezahlung oder aus anderen Gründen ist hierbei oftmals die Identifizierung eines Benutzers erforderlich, mittels der der Anbieter in Zuordnung einer Benutzerkennung zu weiteren, ggf. durch eine Registrierung bekannte Daten des Benutzers, etwa der Kontonummer eines Kontos des Benutzers, eine Bestellung oder einen sonstigen Auftrag abwickeln kann, etwa indem er von dem Konto einen Geldbetrag abbucht.

Bleibt die Anwendung in der elektronischen, oder virtuellen, Welt, wie beispielsweise bei der Gewährung eines Zugangs zu im Internet hinterlegten Inhalten, erfolgt die Identifizierung über bekannte Verfahren, bei der bspw. der Benutzer sich mit seiner Postanschrift und eventuell einer Einzugsermächtigung registriert, im Gegenzug eine Kundennummer oder eine Zugangskennung erhält, und mit dieser hinfort Zugang etwa zu den gewünschten Inhalten im Web erhält.

Sehr häufig betreffen jedoch elektronisch ausgeführte Bestell- oder Anforderungsvorgänge solche Waren oder Dienstleistungen, die in der realen Welt ausgeliefert oder erbracht werden sollen. Beispielsweise ist es für Benutzer bequem, Eintrittskarten für ein Kinovorführung, ein Konzert oder eine Sportveranstaltung elektronisch und Off-Site zu bestellen oder zu kaufen, d. h. ohne dass der Benutzer vorher zeitaufwändig persönlich an der Kinokasse, Konzertkasse oder einer Vorverkaufsstelle erscheinen muss. Für den elektronischen Bestellvorgang nutzt der Benutzer die oben angedeuteten, bekannten Verfahren zu seiner Identifizierung. Bei Erscheinen am Veranstaltungsort, oder bei Auslieferung der Ware muss er sich jedoch erneut identifizieren, nämlich als Auftraggeber. Die für die Off-Site-Identifizierung verwendeten Kennungen sind hierzu in der Regel untauglich: Der Zusteller oder Leistungserbringer kennt die für die elektronische Welt verwendeten Kennungen des Benutzers nicht ohne weiteres.

Die Verknüpfung zwischen den Identifizierungsverfahren bzw. den dort verwendeten Kennungen der virtuellen Welt (Off-Site) und der realen Welt (On-Site) erfordert bisher umständliche und aufwendige Verfahren.

Beispielsweise werden aufgrund der auf elektronischem Wege erfolgten Bestellung Wertmarken in Form von Papier ausgegeben, also etwa Fahrscheine für den öffentlichen Verkehr auf dem Postwege verschickt. Die elektronische Identifizierung erfolgt hier etwa über die Angabe einer Kreditkartennummer, die Identifizierung in der realen Welt über die Postanschrift. Alternativ gibt der Benutzer elektronisch eine Kennung an, die sich mittelbar auf der ihm zugesandten Wertmarke wiederfindet. Diese Kennung kann dann bei Erscheinen des Benutzers am Veranstaltungsort oder in einem öffentlichen Verkehrsmittel durch einen Kontrolleur etwa mittels eines Scanners eingelesen und überprüft werden.

Bei elektronischen Verfahren kommen in der Regel Magnet- oder Chipkarten zum Einsatz, die einen Identifizierungscode enthalten, welcher ausgelesen wird. Dies kann beispielsweise berührungslos durch den Einsatz von Transpondern erfolgen. Zusätzlich muss der Nutzer für einige Anwendungen einen geheimen und nur ihm bekannten Zugangscode eingeben.

Eine immer größere Bedeutung für den Zugang zur virtuellen Welt erlangen insbesondere mobile Endgeräte, also etwa Mobiltelefone, die sich zunehmend zu universell nutzbaren Geräten entwickeln. Als Mobilfunknetz wird im folgenden die gesamte Infrastruktur eines Netzbetreibers, bestehend wenigstens aus Funknetz und Vermittlungsnetz, bezeichnet. Es kann sich bei den Mobilfunknetzen beispielsweise um GSM- oder UMTS-Netze handeln. Jedoch werden auch solche Gesamtnetze, deren Funknetze auf anderen oder weiteren Technologien basieren, wie etwa Bluetooth, IrDA oder WLAN, unter dem Begriff Mobilfunknetze subsumiert. Mobile Endgeräte sind mittels der entsprechenden Technologie, also etwa GSM, UMTS, Bluetooth etc., zur drahtlosen Datenübertragung zwischen einer Basisstation eines solchen Funknetzes befähigt.

Wird eine Off-Site-Identifizierung eines Benutzers notwendig, kann er sich über sein mobiles Endgerät etwa bequem über seine Teilnehmernummer, die MSISDN (Mobile Subscriber ISDN Number) identifizieren. Die MSISDN wird nämlich unter anderem bei der Übermittlung von SMS-Nachrichten in GSM-Netzen automatisch eingefügt. Alternativ kann der Benutzer sich z.B. bei WAP-basierten Anwendungen über ein Login und ein Kennwort identifizieren.

Jedoch bleiben auch für eine solche bequeme Off-Site-Identifizierung mittels mobilem Endgerät die oben geschilderten Nachteile in Bezug auf die Verknüpfung mit einer On-Site-Identifizierung zum tatsächlichen Erhalt einer Ware, einer Dienstleistung oder eines Zutritts zu einer Veranstaltung oder eines Transportmittels etc. unverändert gültig.

Beispielsweise ist eine On-Site-Identifizierung mittels mobilem Endgerät über eine SMS-Nachricht möglich. Der Nutzer erhält aufgrund seiner Off-Site getätigten Identifizierung und Anforderung eine SMS-Nachricht, die in verschlüsselter Form Angaben über seine Identität und einen Verwendungszweck enthält. Zum Nachweis der entsprechenden Berechtigung muss dann der in der SMS enthaltene Code einem entsprechendem Kontrollgerät, beispielsweise bei einer Zugangskontrolle, eingegeben werden, welches den Kode entschlüsselt. Hierzu ist in der Regel das zeitaufwendige Ablesen des Kodes von der Anzeige des Endgerätes, eventuell das zwischenzeitliche Notieren auf Papier, sowie die erneute Eingabe des Kodes am Kontrollgerät notwendig. Natürlich darf der Benutzer den Kode nicht verlieren, ansonsten wird ein erneuter, kostenpflichtiger Vorgang erforderlich.

In der Patentschrift DE 197 49 388 C2 mit dem Titel "verfahren, mobile Abhöreinrichtung und FunkKommunikationssystem zum Abhören von Verbindungen auf einer Funkschnittstelle" wird ein Verfahren, ein FunkKommunikationssystem und eine Vorrichtung, in den Medien als "IMSI-Catcher" bezeichnet, beschrieben, welches die Identifizierung bzw. Ermittlung der Identität eines Benutzers ermöglicht. Verfahren und Vorrichtung werden dadurch gekennzeichnet, dass sich der IMSI-Catcher wie ein zwischen ein Endgerät und eine Basisstation eines Mobilfunknetzes, insbesondere eines auf dem GSM-Mobilfunkstandard basierenden Netzes, geschaltetes Gateway verhält. Er emuliert gegenüber dem Endgerät eine Basisstation des GSM-Netzes. In letzterer Funktion empfängt der IMSI-Catcher in einer vom Endgerät gesendeten Verbindungsaufbauanforderung teilnehmerbezogene Daten, und kommt auf diese Weise beispielsweise in den Besitz der von dem Endgerät übermittelten IMSI.

Ein bei einem GSM-Netz registrierter Benutzer verfügt in Bezug auf das GSM-Mobilfunknetz über eine Benutzerkennung, nämlich eine IMSI (International Mobile Subscriber Identity). Diese ist dem Benutzer eindeutig zugeordnet und dient dem Betreiber des Mobilfunknetzes zur Identifizierung des Benutzers, sobald dieser sich über das Endgerät am Netz anmeldet.

Der IMSI-Catcher und auf ihn bezogene Verfahren sind jedoch für On-Site-Identifizierungen eines Benutzers ungeeignet, weil der IMSI-Catcher mit gegenüber den umgebenden Basisstationen erhöhter Leistung sendet, um ein Anmelden eines abzuhörenden Endgerätes an der emulierten Basisstation zu erzwingen. Neben dem zur Identifizierung benutzten Endgerät des Benutzers wären weitere Endgeräte anderer Benutzer sowie das tatsächliche Mobilfunknetz in ihrem Betrieb betroffen.

Im Sinne der Patentschrift soll der Benutzer weder Kenntnis von der Identifizierung erhalten ("Abhöreinrichtung"), noch hat er über sein Endgerät oder durch andere Mittel oder Verfahren irgendeinen Einfluss darauf.

Darüber hinaus lehrt die erwähnte Patentschrift nicht, in welcher Weise die erhaltene IMSI für die Verknüpfung mit weiteren, vom Benutzer durchgeführten Off-Site-Identifizierungsvorgängen genutzt werden kann, bei denen der Benutzer sich in der Regel nicht mit der IMSI, sondern anderen Kennungen identifiziert.

Der Erfindung liegt also die Aufgabe zugrunde, ein On-Site-Identifizierungsverfahren anzugeben, das für den Benutzer einfach und bequem durchzuführen ist und darüber hinaus eine Verknüpfung mit einer mittels bekannter Verfahren durchgeführten Off-Site-Identifizierung des Benutzers gestattet, sowie eine entsprechende Vorrichtung zur Durchführung der On-Site-Identifizierung.

Diese Aufgabe wird durch ein Verfahren mit den Merkmalen des Anspruchs 1 und eine Vorrichtung mit den Merkmalen des Anspruchs 19 gelöst.

Ein wesentlicher Gedanke der Erfindung ist, ausgehend von einer bekannten Off-Site-Identifizierung mittels eines mobilen Endgerätes, eine für den Benutzer einfache und bequeme On-Site-Identifizierung vorzuschlagen, die über die bei einem Mobilfunk-Betreiber herkömmlich vorhandenen, benutzerbezogenen Daten eine Verknüpfung mit der Off-Site-Identifizierung ermöglicht.

Hierzu wird vorgeschlagen, das Endgerät durch ein Lesegerät von Mobilfunknetzen, die in der Umgebung des Lesegerätes verfügbar sind, abzuschirmen. Ferner emuliert das Lesegerät mindestens einen Teil der Funktionalität einer Basisstation eines Mobilfunknetzes gegenüber dem Endgerät. Das Endgerät übermittelt dann eine Benutzerkennung an das Lesegerät.
Diese Verfahren läuft ohne Störung der in der Umgebung des Lesebereiches verfügbaren Mobilfunknetze oder weiterer Endgeräte ab. Die von dem Lesegerät auf diese Weise vor Ort, bzw. on-site, ausgelesene Benutzerkennung kann weiterverarbeitet werden, und kann insbesondere mit solchen Identifizierungsdaten des Benutzers verknüpft werden, die von diesem im Zusammenhang mit einer Off-Site-Identifizierung erhoben werden.

In einer Ausgestaltung des Verfahrens wird das Endgerät einfach und wirksam dadurch von dem Mobilfunknetz abgeschirmt, dass mindestens seine Antenne in ein abgeschirmtes Raumvolumen, nämlich einen Abschirmbereich, des Lesegerätes eingebracht wird. Hierzu steckt der Benutzer das Endgerät einfach in das Lesegerät ein, und entnimmt es nach dem Auslesevorgang wieder.

Das Lesegerät kann die Basisstation gegenüber dem Endgerät emulieren, indem eine Sendeeinrichtung des Lesegerätes gemäß der Spezifikation des Mobilfunknetzes mit einer im Vergleich zu Basisstationen des Mobilfunknetzes sehr geringen Leistung in den Abschirmbereich hinein sendet. Der Energiebedarf der Sendeeinrichtung ist also sehr gering. Ggf. kann der gesamte Energiebedarf des Lesegerätes durch Batteriebetrieb abgedeckt werden, wodurch das Lesegerät leicht transportabel ist.

In einer Ausführungsform der Erfindung sendet das Lesegerät eine Aufforderungsnachricht zur Übermittlung der Benutzerkennung an das Endgerät, und das Endgerät übermittelt in Reaktion auf die Aufforderungsnachricht die Benutzerkennung an das Lesegerät. Solche Aufforderungsnachrichten sind Teil herkömmlicher Mobilfunk-Spezifikationen und stellen eine einfache Möglichkeit dar, die Benutzerkennung aus dem Endgerät auszulesen.
Die Sendeeinrichtung kann in Reaktion auf das Einbringen des Endgerätes in den Abschirmbereich die Aufforderungsnachricht an das Endgerät auf dem von dem Endgerät benutzten Kanal der Luftschnittstelle des Mobilfunknetzes senden. Hierdurch wird sichergestellt, dass der Auslesevorgang zügig erfolgt.

Nach einer alternativen Ausgestaltung des erfindungsgemäßen Verfahrens sendet die Sendeeinrichtung unabhängig vom Einbringen des Endgerätes in den Abschirmbereich kontinuierlich Aufforderungsnachrichten auf Kanälen der jeweiligen Luftschnittstelle einer Mehrzahl von Mobilfunknetzen. Hierdurch können Mittel zur Erkennung, ob ein Endgerät in das Lesegerät eingebracht wurde, entfallen. Das Lesegerät kann daher einfacher ausgeführt werden. Durch die kontinuierliche, d.h. in kurzen Abständen wiederholte Sendung der Aufforderungsnachrichten auf allen Kanälen wird ein zügiger Auslesevorgang dennoch sichergestellt.

Erfindungsgemäße Verfahren können insbesondere die Basisstation für mindestens ein Mobilfunknetz emulieren, das in der Umgebung des Lesegerätes verfügbar ist. Dies kann dann automatisch erfolgen, wenn die in der Umgebung des Lesegerätes verfügbaren Mobilfunknetze durch Messung ermittelt werden. Hierdurch wird jeweils eine Basisstation für jedes Mobilfunknetz, bei dem das Endgerät etwa angemeldet sein könnte, automatisch im Abschirmbereich emuliert, was erneut dem Erfolg und der Zügigkeit des Auslesevorganges zugute kommt.

Weiterhin ist es für die Zügigkeit des Auslesevorgangs für manche Konfigurationen von Endgeräten vorteilhaft, wenn die Sendeeinrichtung in zeitlichem Zusammenhang mit der Aufforderungsnachricht eine Aufenthaltsbereichskennung für das oder jedes Mobilfunknetz ausstrahlt, die sich von der Aufenthaltsbereichskennung dieses Mobilfunknetzes in der Umgebung des Abschirmbereiches unterscheidet.
In weiteren Ausführungsformen des erfindungsgemäßen Verfahrens, die ohne Aufforderungsnachricht auskommen, wird die Basisstation für ein solches Mobilfunknetz emuliert, das in der Umgebung des Lesegerätes verfügbar ist. Die Sendeeinrichtung strahlt eine Aufenthaltsbereichskennung für das Mobilfunknetz aus, die sich von der Aufenthaltsbereichskennung des Mobilfunknetzes in der Umgebung des Abschirmbereiches unterscheidet. Das Endgerät sendet in Reaktion darauf die Benutzerkennung aus. Das Lesegerät leitet dann die von dem Endgerät empfangene Benutzerkennung an Einrichtungen des Mobilfunknetzes weiter, und bekommt von den Einrichtungen des Mobilfunknetzes eine zweite Benutzerkennung übermittelt.

Dieses Verfahren beruht ebenfalls auf den in Mobilfunk-Spezifikationen herkömmlich vorgesehenen Mechanismen. Der Vorteil besteht auch hier darin, dass das Endgerät rasch und in gewünschter Weise auf die ausgesendete, neue Aufenthaltsbereichskennung reagiert. Sofern es sich bei der unmittelbar vom Endgerät übermittelten Benutzerkennung um eine temporär gültige Kennung handelt, ermöglicht der Zugriff auf die Einrichtungen des Mobilfunknetzes die Abbildung auf eine zeitlich länger gültige Kennung.

In einer weiteren, alternativen Ausführungsform des erfindungsgemäßen Verfahrens wird die Basisstation für ein solches Mobilfunknetz emuliert, das nicht in der Umgebung des Lesegerätes verfügbar ist. Die Sendeeinrichtung strahlt eine Aufenthaltsbereichskennung für das Mobilfunknetz aus. Das Endgerät sendet in Reaktion darauf die Benutzerkennung aus. Dieses Verfahren kann vorteilhaft sein, wenn das Endgerät keine temporäre Benutzerkennung entsprechend der vorstehend geschilderten Alternative enthält. Ferner kann, wenn auf andere Weise sichergestellt ist, dass das emulierte Netz nicht zufällig mit einem in der Umgebung des Abschirmbereiches verfügbaren Netzes übereinstimmt, die Erkennung von in der Umgebung des Abschirmbereiches verfügbaren Netzen entfallen.

Bei dieser Ausgestaltung kann neben der Benutzerkennung auch eine Gerätekennung des Endgerätes an das Lesegerät übermittelt werden. Die Gerätekennung kann ebenfalls für Identifizierungszwecke verwendet werden.
In weiteren Ausgestaltungen des Verfahrens werden vom Endgerät an das Lesegerät übermittelte Informationen in einer Speichereinrichtung gespeichert. Hierdurch ist eine Dokumentation des Identifizierungsvorganges möglich, sowie die spätere Nutzung oder Weiterverarbeitung der Benutzerkennung und/oder weiterer benutzerbezogener Daten.

Ferner können in einem Registrierungsvorgang in der Speichereinrichtung solche Identifizierungsdaten, die für andere Verfahren zur Identifizierung des Benutzers herangezogen werden, insbesondere eine Mobilfunk-Rufnummer des Benutzers, in Zuordnung zu der Benutzerkennung gespeichert werden. Die anderen Verfahren können beispielsweise Off-Site-Identifizierungen betreffen. Eine Registrierung kann etwa dann zweckmäßig sein, wenn kein unmittelbarer Zugriff auf die teilnehmerbezogene Datenbasis des Mobilfunk-Betreibers erfolgen soll oder kann. Die Verknüpfung von On-Site-Identifizierungsdaten (der Benutzerkennung) und Off-Site-Identifizierungsdaten (etwa der Mobilfunk-Rufnummer) wird durch den, i.d.R. einmaligen, Registrierungsvorgang hergestellt.

Bei einer Ausgestaltung des Registrierungsvorgangs wird zur Registrierung eine Nachricht, die die Benutzerkennung enthält, vom Endgerät über das Mobilfunknetz an das Lesegerät übermittelt, wobei das Mobilfunknetz der Nachricht Identifizierungsdaten hinzufügt. Die durch die Nachricht an das Lesegerät übermittelten Identifizierungsdaten werden dann in Zuordnung zu der Benutzerkennung gespeichert.
Zusätzlich zu der ausgelesenen Benutzerkennung (also dem On-Site-Identifizierungsdatum) sind hierdurch weitere Identifizierungsdaten, zweckmäßigerweise die für die Off-Site-Identifizierung benutzten Daten, einander zugeordnet gespeichert. Der Vorteil bei diesem Verfahren besteht darin, dass zur Registrierung kein Lesegerät erforderlich ist, der Benutzer kann also auch die Registrierung nur unter Benutzung seines Endgerätes off-site durchführen.

Nach einer alternativen oder ergänzenden Ausgestaltung des Registrierungsvorganges erzeugt das Lesegerät aus der ausgelesenen Benutzerkennung eine eindeutig der Benutzerkennung zugeordnete Registrierungskennung. Das Lesegerät übermittelt sodann eine Nachricht, die die Registrierungskennung enthält, außerhalb des Mobilfunknetzes an das Endgerät. Nach der Übermittlung kann das Endgerät aus dem Abschirmbereich entnommen werden. Die Nachricht wird vom Endgerät über das Mobilfunknetz zurück an das Lesegerät übermittelt. Hierbei fügt das Mobilfunknetz der Nachricht Identifizierungsdaten hinzu. Die durch die Nachricht an das Lesegerät übermittelten Identifizierungsdaten werden dann in Zuordnung zu der Benutzerkennung gespeichert werden.
Die hinzugefügten Daten können insbesondere solche sein, die von dem Benutzer für Off-Site-Identifizierungen verwendet werden. Die Abbildung der Benutzerkennung auf eine Registrierungskennung vermeidet das Versenden der unverschlüsselten Benutzerkennung über das Mobilfunknetz und eine Verbindung zwischen dem Mobilfunknetz und dem Lesegerät. Die Übermittlung der Nachricht vom Lesegerät an das Endgerät kann etwa über die von dem Lesegerät emulierte Basisstation erfolgen.

In einer weiteren alternativen Ausführungsform der Registrierung können Informationen, insbesondere Identifizierungsdaten, an einer Eingabeeinheit des Endgerätes oder über eine mit dem Endgerät verbundene Eingabevorrichtung eingegeben und außerhalb des Mobilfunknetzes vom Endgerät an das Lesegerät übermittelt werden. Für Zwecke der Registrierung erfolgt dieses zweckmäßig etwa so, dass, nachdem die Benutzerkennung aus dem Endgerät ausgelesen wurde, das Endgerät zwischenzeitlich nicht aus dem Lesegerät entnommen wurde, die Identifizierungsdaten eingegeben und etwa über die im Abschirmbereich emulierte Luftschnittstelle übertragen werden.

Neben Identifizierungsdaten können auch andere oder weitere Informationen eingegeben und vom Endgerät an das Lesegerät übermittelt werden. Es kann sich hierbei etwa um eine PIN des Benutzers handeln oder weitere Informationen, die die Identifizierung zum Beispiel sicherer und/oder eindeutiger machen.In Ergänzung zu den bisher geschilderten Ausführungen können vom Lesegerät an das Endgerät außerhalb des Mobilfunknetzes Informationen übermittelt und diese auf einer Anzeigeeinheit des Endgerätes ausgegeben werden. Diese Informationen können den Auslesevorgang für den Benutzer transparenter machen, und/oder ihn durch den Ausleseprozess führen. Da das Mobilfunknetz nicht involviert ist, entstehen für den Benutzer hierdurch keine Kosten.
Eine weitere Ausgestaltung der bisher geschilderten Verfahren kann darin bestehen, dass der verfahrensgemäße Gebrauch des mobilen Endgerätes durch die Eingabe eines Kennwortes, einer PIN oder einer vergleichbaren Authentifizierung sicherheitswirksam geschützt wird. Dadurch wird der unrechtmäßige Gebrauch des Endgerätes bzw. der Benutzerkennung für Identifizierungszwecke verhindert.
Die über das Endgerät empfangene Benutzerkennung kann mit einer Liste von in der Speichereinrichtung gespeicherten Benutzerkennungen verglichen werden, und ein Signal kann ausgegeben werden, das das Ergebnis des Vergleichs angibt. Hierdurch können etwa als gestohlen gemeldete Endgeräte erkannt werden.

Die Merkmale und Vorteile eines erfindungsgemäßen Lesegerätes bzw. einer Anordnung mit einem solchen ergeben sich aus den Merkmalen und Vorteilen der erfindungsgemäßen Verfahren.

Insbesondere kann ein erfindungsgemäßes Lesegerät zur Kommunikation mit dem eingebrachten Endgerät gemäß einer Mehrzahl von Mobilfunknetz-Spezifikationen ausgebildet sein, und kann alternativ oder in Ergänzung hierzu gleichzeitig eine Mehrzahl von Basisstationen einer Mehrzahl von Mobilfunknetzen emulieren, mit den oben geschilderten Vorteilen in Bezug auf die Zügigkeit des Verfahrens und die einfache Ausführung des Lesegerätes.

Das Lesegerät kann mindestens mittelbar mit Einrichtungen des oder jedes Mobilfunknetzes für Datenübertragungszwecke verbunden sein, das in der Umgebung des Abschirmbereiches verfügbar ist. Hiermit kann der Identifizierungs- und/oder ggf. der Registrierungsvorgang vereinfacht und beschleunigt werden.

Eine Anordnung mit einem Lesegerät und für Datenübertragungszwecke verbundenen Speichereinrichtung zur Speicherung wenigstens der vom Endgerät übermittelten Benutzerkennung kann so ausgestaltet sein, dass etwa eine Mehrzahl von Lesegeräten Zugriff auf die Speichereinrichtung hat, wodurch der Benutzer sich einfach und bequem an beliebigen Lesegeräten identifizieren/registrieren kann.

Die Vorteile und Zweckmäßigkeiten der Erfindung werden nachfolgend anhand von Ausführungsbeispielen noch eingehender beschrieben. Zur Veranschaulichung dienen die Figuren 1 bis 7. Es werden für gleiche oder gleichwirkende Verfahrensbestandteile dieselben Bezugszeichen verwendet. Es zeigt:
Fig. 1 ein schematisches Blockschaltbild eines Lesegerätes,
Fig. 2 eine beispielhafte Ausführungsform des Lesegerätes,
Fig. 3 ein erstes Ablaufdiagramm für eine erste Ausführungsform einer Benutzeridentifizierung zwischen mobilem Endgerät und Lesegerät,
Fig. 4 ein zweites Ablaufdiagramm für eine zweite Ausführungsform einer Benutzeridentifizierung zwischen mobilem Endgerät und Lesegerät,
Fig. 5 ein drittes Ablaufdiagramm für eine dritte Ausführungsform einer Benutzeridentifizierung zwischen mobilem Endgerät und Lesegerät,
Fig. 6 ein erstes Ablaufdiagramm für eine Benutzerregistrierung am Lesegerät für eine spätere Benutzeridentifizierung,
Fig. 7 ein zweites Ablaufdiagramm für ein weiteres Verfahren der Benutzerregistrierung am Lesegerät für eine spätere Benutzeridentifizierung.

Als allen Ausführungsbeispielen zugrundeliegend wird angenommen, dass ein Benutzer Zugang zu einer Publikumsveranstaltung erhalten möchte, bspw. zu einer Filmvorführung in einem Kino, einer Sportveranstaltung, oder einem Konzert. Herkömmlich muss der Benutzer meist Tage vor Beginn der Veranstaltung persönlich bei einer (Kino-, Stadion-, Theater- ) Kasse erscheinen, um dort eine Eintrittskarte zu erwerben. Diese muss er sorgfältig aufbewahren, um sie am Eingang der Veranstaltungsräumlichkeiten vorweisen zu können.

Alternativ kann der Benutzer elektronisch, beispielsweise über ein mobiles Benutzerendgerät, also etwa ein Handy, die Eintrittskarte bestellen. Hierzu muss er jedoch dem Kartenaussteller seine Postanschrift zugänglich machen, damit ihm die Eintrittskarte zugesendet werden kann. Aufgrund des Zusendungsvorgang ist es erforderlich, dass die elektronische Bestellung mehrere Tage vor der Veranstaltung durchgeführt wird.

Die unten geschilderten Ausführungsbeispiele gehen davon aus, dass ein mobiles Endgerät des Beispielbenutzers und das Mobilfunknetz, bei dem das Endgerät angemeldet sein muss und über das es Sprach- oder Datenverbindungen herstellt, auf der GSM-Technologie basieren. Der Benutzer verfügt in Bezug auf das GSM-Mobilfunknetz über eine Benutzerkennung, nämlich eine IMSI (International Mobile Subscriber Identity). Diese ist dem Benutzer eindeutig zugeordnet und dient dem Betreiber des Mobilfunknetzes zur Identifizierung des Benutzers, sobald dieser sich über das Endgerät am Netz anmeldet.

Die IMSI ist auf einer SIM(Subscriber Identity Module)-Karte enthalten, die sich während des Betriebs des Endgerätes 10 in diesem befindet, so dass das Endgerät 10 jederzeit auf die IMSI zugreifen kann, um diese bspw. während eines Anmeldevorganges an das Mobilfunknetz 70 zu senden.

Neben der IMSI wird in dem Mobilfunk- bzw. GSM-Netz 70 auch eine TMSI (Temporary Mobile Subscriber Identity) für einen bestimmten Zeitraum, etwa eine vorgegebene Zahl von Verbindungen, eindeutig zugeordnet. Die TMSI wird während des Gültigkeitszeitraumes durch das Endgerät 10 auf der SIM-Karte gespeichert und anstelle der IMSI dem GSM-Netz 70 für Identifizierungszwecke übermittelt. Im GSM-Netz 70 kann aus der TMSI die IMSI und damit der Benutzer ermittelt werden.

Die IMSI wird gewöhnlich nur dann vom Endgerät an das GSM-Netz übertragen, wenn die TMSI ungültig geworden ist oder im GSM-Netz der Zugriff auf die IMSI-TMSI-Zuordnungstabellen momentan nicht möglich ist.

Der Benutzer verfügt ferner über eine Teilnehmernummer (Mobile Subscriber ISDN Number, MSISDN). Mit dieser kann er sich zunächst bei der Anforderung der Zutrittsberechtigung zu der gewünschten Veranstaltung identifizieren. Der Benutzer sendet etwa eine SMS an eine ihm bekannte Rufnummer eines Kartenausstellers. In dieser SMS ist in geeigneter Weise die gewünschte Veranstaltung gekennzeichnet. Ausserdem wird gemäß der GSM-Spezifikation die MSISDN des Benutzers automatisch in die SMS eingefügt. Die MSISDN des Benutzers wird durch den Kartenaussteller gespeichert oder an den Veranstalter der betreffenden Veranstaltung weitergeleitet und von diesem gespeichert.

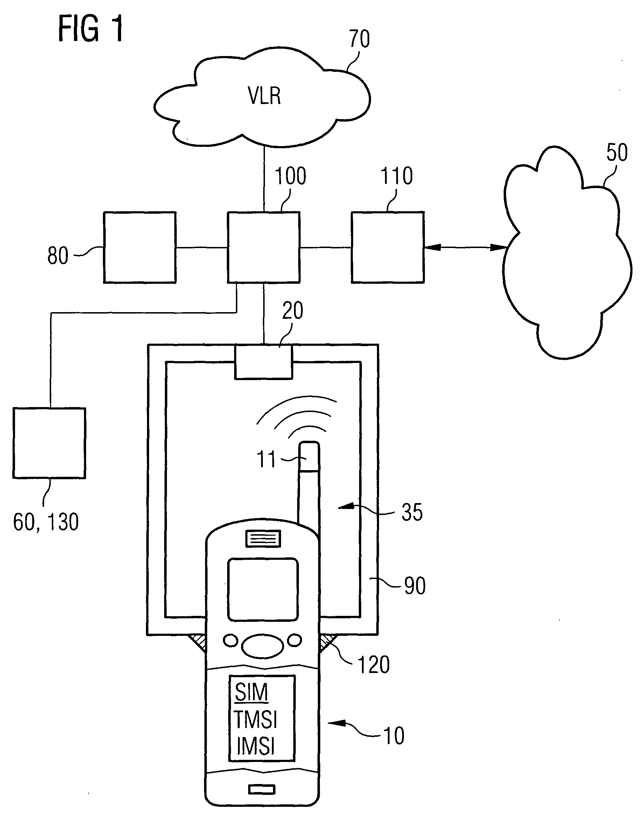

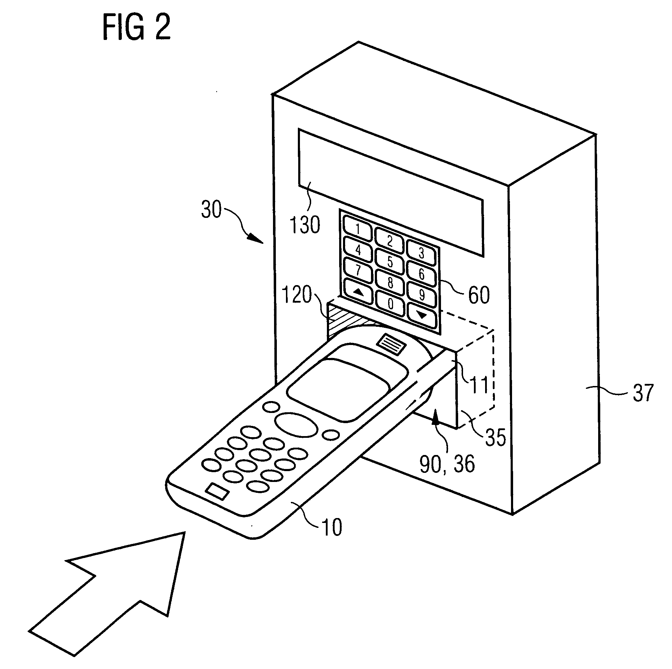

Um Zugang zu der Veranstaltung zu erhalten, führt der Benutzer sein mobiles Endgerät mit sich. Über dieses und ein erfindungsgemäß ausgeführtes Lesegerät erfolgt ein weiteres, nämlich das erfindungsgemäße, Identifizierungsverfahren. Vor der weiteren Beschreibung dieses Verfahrens wird zunächst das Lesegerät anhand der Figuren 1 und 2 genauer dargestellt.

In Fig. 1 ist ein Blockschaltbild des Lesegerätes beispielhaft dargestellt. Das mobile Endgerät 10, das in der Figur als ein Mobiltelefon mit einer eingesteckten SIM-Karte für das GSM-Mobilfunknetz 70 ausgebildet ist, sendet bzw. empfängt Daten über seine Antenneneinheit 11 an bzw. von einer Sende-/Empfangseinheit 20, die innerhalb des Lesegerätes 30 angeordnet ist.

Die Sende-/Empfangseinheit 20 sendet bzw. empfängt innerhalb eines Bereiches 35 des Lesegerätes 30, dessen Größe der üblichen Größe mobiler Endgeräte entspricht. Der Bereich 35 ist gegenüber elektromagnetischen Feldern abgeschirmt, die von den Basisstationen eines oder mehrerer Mobilfunknetze in der Umgebung des Lesegerätes 30 erzeugt werden. Zur Ereichung dieser Abschirmwirkung ist der den Bereich 35 umschließende Teil des Lesegerätes 30 als Faradayscher Käfig ausgeführt.

Damit die Störung von Endgeräten in der Umgebung des Lesegerätes 30 vermieden wird, sendet bzw. strahlt die Sendeeinheit 20 ausschließlich innerhalb des abgeschirmten Bereiches 35. Für die Sendung an das eingesteckte Endgerät 10, bzw. dessen Antenneneinheit 11, genügt es, wenn die Sendeeinheit 20 mit einer im Vergleich zu Basisstationen eines Mobilfunknetzes sehr geringen Leistung in den Abschirmbereich 35 hinein sendet.

Weiterhin enthält das Lesegerät 30 eine Tastatur 60. Das Lesegerät 30 kann auf das VLR eines bestimmten Mobilfunknetzes 70 zugreifen, bei dem das mobile Endgerät 10 angemeldet ist. Das Lesegerät 30 enthält weiterhin eine Speichereinrichtung 80 zum Speichern anfallender Daten. Diese kann als ein lokaler Speicher des Lesegerätes oder als ein externer und zentraler Server mit Zugriffsmöglichkeiten für eine Mehrzahl von Lesegeräten 30 ausgebildet sein.

Das Lesegerät 30 verfügt über eine Netzerkennungseinrichtung 110 zur Ermittlung weiterer in der Umgebung des Lesegerätes 30 verfügbarer Mobilfunknetze 50.

Eine Steuereinheit 100 ist für die Kommunikation des Lesegerätes 30 mit dem mobilen Endgerät 10, insbesondere über die interne Sende-/Empfangseinheit 20, ausgebildet. Sie steht in datenübertragender Verbindung mit der Sende/Empfangseinheit 20, der Tastatur 60, dem VLR des Mobilfunknetzes 70, dem Speicher 80 und der Netzerkennungseinrichtung 110. Die nachfolgend genannten Verfahrensschritte werden innerhalb der Steuereinheit 100 abgearbeitet und von den entsprechenden Komponenten 20, 60, 70, 80 und 110 ausgeführt.

Fig. 2 stellt eine beispielhafte Ausführungsform des Lesegerätes 30 dar. Das Lesegerät 30 weist innerhalb eines Gehäuses 37 einen Einsteckschacht 36 auf, der den abgeschirmten Bereich 35 mit dem Aufnahmebereich 90 und der im Inneren des Lesegerätes 30 angeordneten Sende/Empfangseinheit 20 umfasst. Weiterhin ist die Tastatur 60 auf der Vorderseite des Gehäuses angeordnet. Über diese kann eine Eingabe eines Kennwortes oder einer PIN durch den Nutzer erfolgen. Ein Display 130 dient zur Anzeige von Informationen für den Benutzer, beispielsweise zur Signalisierung eines erfolgreichen oder fehlerhaften Lesevorganges oder sonstigen Aufforderungen und Hinweisen. Wie in Fig. 2 durch einen Pfeil angedeutet ist, wird das mobile Endgerät 10 in den Einsteckschacht 36 eingeführt, wobei Ausnehmungen 120 am Aufnahmebereich 90 ein rastendes Einschieben des mobilen Endgerätes ermöglichen. Der Innenraum des Einsteckschachtes 36, d.h. der abgeschirmte Bereich 35, ist gegenüber äußeren Mobilfunknetzen abgeschirmt. Die Steuereinheit 100 und die übrigen Komponenten 40, 110 und - in Abhängigkeit von der konkreten Ausführungsform - der Speicher 80 sind innerhalb des Gehäuses 37 untergebracht.

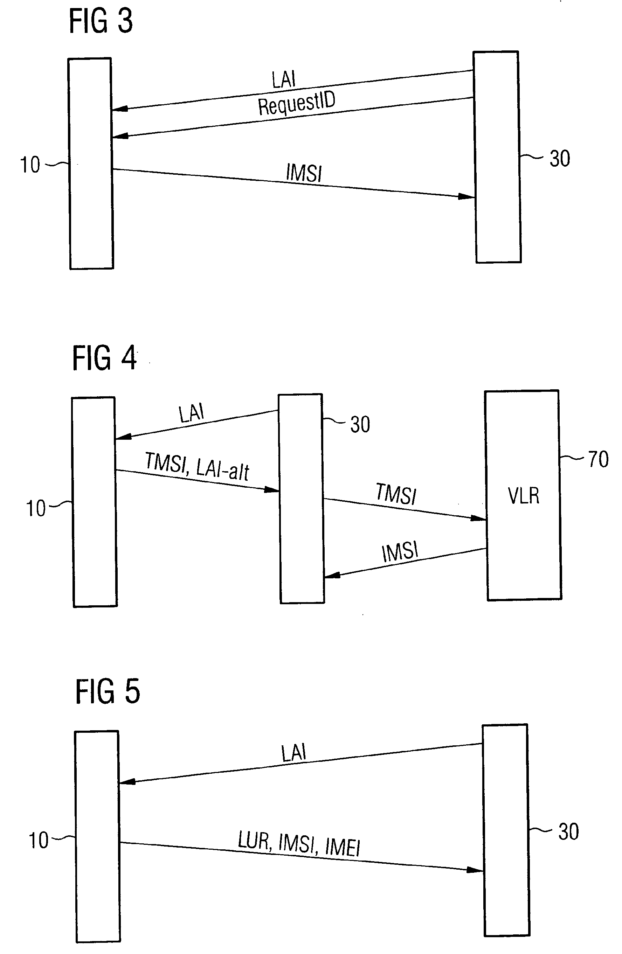

Für die folgenden Verfahrensbeispiele wird davon ausgegangen, dass Daten zwischen dem mobilen Endgerät 10 einerseits und dem Lesegerät 30 bzw. weiteren Verfahrensbestandteilen, insbesondere Einrichtungen in einem Mobilfunknetz, andererseits ausgetauscht werden. Dabei werden mobiles Endgerät, Lesegerät und jeweils zusätzlich erwähnte Komponenten als Black Boxes betrachtet. Die Zeitachse verläuft in den Ablaufdiagrammen der Figuren 3 bis 7 in vertikaler Richtung von oben nach unten. Die Sende- bzw. Übertragungsrichtung von Nachrichten ist durch Pfeile angedeutet.

Zur Durchführung eines jeden erfindungsgemäßen Verfahrensbeispieles wird anfangs das mobile Endgerät 10 in das Lesegerät 30, d.h. in den Einsteckschacht 36 eingesteckt. Damit ist ein Kontakt zwischen dem Endgerät 10, bzw. dessen Antenneneinheit 11 und den Sende- und Empfangsstationen des Mobilfunknetzes 50 nicht mehr möglich, sondern nur noch zwischen der Antenneneinheit 11 und der Sende/Empfangseinheit 20 des Lesegerätes 30.

Die Steuerungseinheit 100 steuert die Sende-/Empfangseinheit 20 so, dass gegenüber dem in das Lesegerät 30 eingebrachten Endgerät 10 eine Basisstation des Mobilfunknetzes 70 oder eines anderen Mobilfunknetzes soweit emuliert wird, wie es für die Übermittlung einer Benutzerkennung vom Endgerät an die Empfangseinheit 11 erforderlich ist. Es wird also in dem Abschirmbereich 35 die Luftschnittstelle einer Zelle eines zellularen Mobilfunknetzes emuliert.

Fig. 3 zeigt in einem Ablaufdiagramm einen ersten beispielhaften Verfahrensablauf F3 zur Benutzeridentifizierung. Die GSM-Spezifikation erlaubt es dem GSM-Netz 70 (bzw. der Emulation dieses Netzes durch das Lesegerät 30), durch die Übermittlung einer Aufforderungsnachricht (Request_ID) die IMSI des Endgerätes 10 anzufordern. Das Lesegerät 30 sendet eine solche Nachricht an das mobile Endgerät 10.

In dem in der Figur 3 dargestellten Beispiel wird im wesentlichen zeitgleich oder zeitversetzt zur Aufforderungsnachricht zusätzlich von der Sendeeinheit 20 eine Aufenthaltsbereichskennung (Location Area Identifier, LAI) über den allgemeinen Datenübertragungskanal (Broadcast Channel) des emulierten Mobilfunknetzes ausgesendet. Es handelt sich hierbei insbesondere um eine LAI, die sich von derjenigen unterscheidet, die von dem Mobilfunknetz 70 in der Umgebung des Lesegerätes 30 ausgesendet wird. Hierdurch wird der unterschiedlichen Konfiguration von GSM-Endgeräten, bspw. dem Gerät 10, vorteilhaft Rechnung getragen.

In Antwort auf die empfangene Aufforderungsnächricht liest das mobile Endgerät 10 die IMSI aus der SIM-Karte aus und sendet diese in einer Nachricht unverschlüsselt an die Empfangseinheit 20 des Lesegerätes 30. Die empfangene Nachricht wird an die Steuereinheit 100 weitergeleitet, wo die IMSI wird aus der Nachricht entnommen und an die Speichereinrichtung 80 zur Speicherung weitergeleitet wird.

Gleichzeitig wird die IMSI an das Mobilfunknetz 70 übertragen (in Fig. 3 nicht gezeigt). Hierzu verfügt das Lesegerät 30 über einen Zugang zu den IMSI-MSISDN-Zuordnungstabellen, die beispielsweise im HLR (Home Location Register) des Mobilfunknetz-Betreibers vorliegen. Über die IMSI kann die MSISDN des Benutzers ermittelt werden. Die zu der übermittelten IMSI gehörige MSISDN des Benutzers wird vom Netz 70 an das Lesegerät 30, bzw. dessen Steuereinheit 100, übermittelt.

Von dem Kartenaussteller wurde die MSISDN des Benutzers an den Veranstalter übermittelt. Dieser hat die MSISDN zusammen mit dem Preis für die erteilte Zugangsberechtigung in der Speichereinrichtung 80 gespeichert. Die vom Netzbetreiber übermittelte MSISDN wird jetzt von der Steuereinrichtung 100 mit der Liste der von dem Kartenaussteller übermittelten Teilnehmernummern verglichen. Die übereinstimmende MSISDN wird zusammen mit dem Preis von der Steuerungseinheit 100 an das Netz 70 übermittelt. Die Abrechnung bzw. Rechnungsstellung erfolgt im weiteren über die bekannten Verfahren zur Abrechnung bzw. Rechnungsstellung, d.h. der Preis für den Besuch der Veranstaltung wird dem Benutzer im Rahmen seiner Telefonrechnung in Rechnung gestellt.
Das Lesegerät 30 kann über bekannte Verfahren, beispielsweise mittels mechanischer oder optischer Sensoren, erkennen, ob ein Endgerät in den abgeschirmten Bereich eingebracht ist. Die Aufforderungsnachricht wird dann gesendet, sobald bzw. unmittelbar nachdem ein mobiles Endgerät in das Lesegerät eingeführt wurde.

In einer weiteren Ausgestaltung dieses Beispiels werden die in der Umgebung des Lesegerätes 30 verfügbaren Mobilfunknetze von der Netzerkennungseinrichtung 110 erkannt. Die Steuerungseinheit 100 veranlasst dann für jedes der erkannten Netze, dass die Sendeeinheit 20 nach dem Einstecken des Endgerätes eine Aufforderungsnachricht ausstrahlt. Hierdurch wird sichergestellt, dass die IMSI eines Benutzers zügig aus dem Endgerät 10 ausgelesen wird, unabhängig davon, bei welchem der Mobilfunknetze 50 das Endgerät 10 angemeldet ist.

Ferner kann die Aufforderungsnachricht statt nur nach dem Einstecken eines Endgerätes auch permanent gesendet werden, beispielsweise in Abständen von einer Sekunde. Hierdurch wird auch ohne Sensoren o.ä. sichergestellt, dass die IMSI eines Benutzers zügig aus dem Endgerät 10 ausgelesen wird.

In einem anhand der Figur 4 erläuterten, alternativen Verfahrensablauf F4 wird nicht die IMSI vom Endgerät 10 an das Lesegerät 30 übertragen, sondern die TMSI. Hierzu verfügt das Lesegerät 30 erneut über einen Zugang zu den IMSI-TMSI-Zuordnungstabellen, die in einem VLR(Visited Location Register) des Mobilfunknetz-Betreibers vorliegen. Auch mittels dieser Tabellen kann der Benutzer eindeutig identifiziert werden. Da die TMSI nur temporäre Gültigkeit hat und nach Ablauf der Gültigkeit im VLR nicht mehr vorliegt, und da die TMSI vom Endgerät verschlüsselt übermittelt wird und nur im Mobilfunknetz selbst entschlüsselt werden kann, ist für dieses Verfahren ein solcher Zugang zum VLR sinnvoll, der die zeitnahe Ermittlung der IMSI aus der TMSI ermöglicht.

In diesem Verfahren sendet die Sendeeinheit 11 des Lesegerätes 30 kontinuierlich eine LAI über den allgemeinen Datenübertragungskanal der Luftschnittstelle der emulierten Zelle des Mobilfunknetzes 70. Es handelt sich hierbei insbesondere um eine LAI, die sich von derjenigen unterscheidet, die von dem Mobilfunknetz in der Umgebung des Lesegerätes 30 ausgesendet wird. Sofort nachdem es in das Lesegerät 30 eingebracht wurde, empfängt das Endgerät 10 diese unterschiedliche LAI. Die unterschiedlichen LAIs werden von dem Endgerät als ein Funkzellenwechsel, genauer als ein Wechsel des Aufenthaltsbereiches (Location Area), interpretiert. Entsprechend der GSM-Spezifikation reagiert das Endgerät 10 hierauf mit der Übermittlung seiner TMSI (sowie der bisherigen LAI, der LAI-alt) an die Empfangseinheit 20 des Lesegerätes 30, die diese an die Steuerungseinheit 100 weiterleitet. Diese veranlasst sodann die Übermittlung der TMSI über den synchronen Zugang an das VLR im Mobilfunknetz 70. Im Mobilfunknetz wird die TMSI entschlüsselt und aus der im VLR vorliegenden IMSI-TMSI-Zuordnungstabelle die eindeutig zu der übermittelten TMSI gehörige IMSI ermittelt, und diese an das Lesegerät 30 übermittelt, welches die IMSI in der Speichereinrichtung 80 zwischenspeichert.

Im Rahmen einer vor der Bestellung der Zutrittsberechtigung erfolgten Registrierung, die weiter unten detailliert geschildert wird, liegt in der Speichereinrichtung 80 bereits eine Zuordnung MSISDN-IMSI des Benutzers vor. Weitere Informationen, etwa der Veranstaltungspreis und der Name des Benutzers, wurden in Reaktion auf die Bestellung in Zuordnung zu dem Tupel MSISDN-IMSI gespeichert. In diesem Falle wird die vom Netzbetreiber übermittelte IMSI von der Steuereinrichtung 100 mit der Liste der von dem Kartenaussteller übermittelten Benutzerkennungen der Tupel MSISDN-IMSI verglichen. Der oder ein Teil des mit der übermittelten IMSI korrespondierenden Datensatzes kann beispielsweise über die Steuerungseinheit 100 auf einen nicht gezeigten Datenträger, etwa eine Diskette oder eine CD-ROM, ausgegeben werden. Dieser Datenträger wird nach der Veranstaltung an den Netzbetreiber übergeben, der die Daten einliest. Die Abrechnung bzw. Rechnungsstellung erfolgt im weiteren über die bekannten Verfahren zur Abrechnung bzw. Rechnungsstellung, d.h. der Preis für den Besuch der Veranstaltung wird dem Benutzer im Rahmen seiner Telefonrechnung in Rechnung gestellt.

Alternativ, d.h. ohne vorgeschaltete Registrierung, kann der Verlauf des Verfahrens F4 nach dem Empfang der IMSI im Lesegerät 30 im Prinzip so wie derjenige des Verfahrens F3 erfolgen, d.h. die IMSI wird zur Ermittlung der MSISDN an den Netzbetreiber (rück-)übertragen, und die ermittelte MSISDN vom Netz 70 an das Lesegerät 30 übermittelt.
Zweckmäßigerweise erfolgt in diesem Falle allerdings die Ermittlung der MSISDN aus der TMSI ohne zwischengeschaltete Übertragungen der IMSI, so dass statt der in Figur 4 gezeigten Übertragung der IMSI vom Mobilfunknetz 70 an das Lesegerät 30 die MSISDN übertragen wird. Der weitere Verlauf bis zur Rechnungsstellung entspricht sodann demjenigen des Verfahrens F3.

Anhand der Figur 5 wird ein weiteres Verfahrensbeispiel F5 geschildert, bei dem das Endgerät 10 nicht über eine TMSI verfügt, beispielsweise weil dem Endgerät 10 noch keine TMSI vom Mobilfunknetz 70 zugewiesen wurde. Diese Verfahrensalternative beruht darauf, dass das Lesegerät 30 die Basisstation eines virtuellen Mobilfunknetzes emuliert, d.h. eines solchen, das nicht in der Umgebung des Lesegerätes 30 verfügbar ist. Die Sendeeinheit 20 des Lesegerätes 30 sendet nach Einstecken des Endgerätes in den Schacht 36 einmalig, oder aber kontinuierlich, d.h. unabhängig vom Vorhandensein eines Endgerätes, eine LAI des virtuellen Mobilfunknetzes über den allgemeinen Datenübertragungskanal.

Unmittelbar nachdem es in das Lesegerät 30 eingesteckt wurde, empfängt das Endgerät 10 die LAI des virtuellen Netzes. Das Endgerät 10 kann noch nicht an diesem Netz angemeldet sein, weil dieses nicht außerhalb des Lesegerätes verfügbar ist. Weil gleichzeitig das Mobilfunknetz 70 abgeschirmt ist, versucht das Endgerät, sich an diesem neuen Netz anzumelden, um mittelbare Verbindung zu seinem Heimatnetz 70 aufzunehmen (Roaming). Es sendet zu diesem Zweck entsprechend der GSM-Spezifikation eine Anmeldungsnachricht, d.h. eine Aufforderung zur Standort-Aktualisierung (Location Update Request, LUR) an das virtuelle Mobilfunknetz, d.h. das Lesegerät 30. Diese Anmeldungsnachricht enthält die unverschlüsselte IMSI, sowie auch die Gerätekennung (International Mobile Equipment Identity, IMEI) des Endgerätes 10.

IMSI und IMEI werden in der Speichereinrichtung 80 gespeichert. Das weitere Verfahren kann entsprechend demjenigen des Verfahrensbeispiels F3 erfolgen, d.h. die IMSI (und evtl. die IMEI) wird an das Mobilfunknetz 70 übermittelt, welches die MSISDN ermittelt und diese dem Lesegerät 30 zur Speicherung bzw. Weiterverarbeitung übermittelt. Alternativ ist der Benutzer mit einer Zuordnung MSISDN-IMSI bereits registriert, so dass aus der erhaltenen IMSI unmittelbar die Identifizierung des Benutzers in Bezug auf seine Bestellung (die er mit der MSISDN durchgeführt hat) erfolgen kann.

Durch die Übermittlung der IMSI (und der IMEI) an das Lesegerät 30 ist der Zweck des Verfahrens erreicht. In einer weiteren Ausgestaltung des Beispielverfahrens F5 wird der Anmeldevorgang für das Endgerät 10 am virtuellen Netz beendet. Hierdurch ist im Vergleich zu den Beispielverfahren F3 und F4 etwas mehr Zeit erforderlich. Jedoch ist das Endgerät hiernach angemeldet und führt keine Fehlerbehandlungsroutinen aufgrund ausbleibender Reaktion der Sendeeinheit 11 auf die Anmeldenachricht durch, die das Endgerät 10 nach Entnahme aus dem Lesegerät 30 und plötzlich erneuter Verfügbarkeit des Mobilfunknetzes 70 in einen undefinierten Zustand bringen könnten.
In den bisher geschilderten Ausführungsbeispielen hat der Benutzer zum Bestellen (einer Zutrittsberechtigung) die MSISDN genutzt, sowie zu seiner auf die Bestellung bezogene Identifikation (an der Zugangskontrolle der Veranstaltung) die IMSI. Die Zusammenführung von MSISDN und IMSI erfolgt in den Zuordnungstabellen des Mobilfunkbetreibers, d.h. im HLR oder VLR. Hierzu ist ggf. eine synchrone Verbindung zwischen dem Lesegerät 30 und dem Mobilfunknetz 70 erforderlich.

Eine solche synchrone Verbindung kann u. U. aufwendig herzustellen und / oder teuer für den Veranstalter bzw. Betreiber des Lesegerätes 30 sein. Eine Alternative wäre, dass der Benutzer die IMSI an einer mit dem Lesegerät verbundenen Eingabeeinheit, etwa der Tastatur 60, eingibt. Die IMSI ist jedoch gewöhnlich dem Benutzer nicht bekannt, und muss es für bekannte Verfahren auch nicht sein, weil diese Kennung zwischen SIM-Karte, Endgerät 10, und dem Mobilfunknetz 70 im Rahmen der GSM-Spezifikation automatisch übertragen wird.

Der Benutzer müsste die IMSI daher aus seiner SIM-Karte auslesen, etwa mittels geeigneter Eingaben an der Eingabevorrichtung des Endgerätes, oder über die Anzeigeeinrichtung eines PCs oder eines PDAs, der mit dem Endgerät für Zwecke der Übertragung der IMSI verbunden wird.

Jedoch fällt hierbei ein Vorteil des erfindungsgemäßen Verfahrens, nämlich seine Einfachheit und Bequemlichkeit für den Benutzer, weg.

Die Zuordnung MSISDN-IMSI kann jedoch vor einem ersten und ggf. weiteren Identifizierungsvorgängen, d.h. Bestellungen, erfolgen. Durch einen solchen Registrierungsvorgang wird eine Zuordnung MSISDN-IMSI in der Speichervorrichtung 80 des Lesegerätes gespeichert. Die Bestellung kann hernach auf elektronischem Wege (bspw. SMS) erfolgen, wobei die MSISDN des Benutzers zu seiner Identifizierung in Bezug auf den Bestellvorgang gespeichert wird. Zusätzlich zu den auf den Benutzer bzw. den Bestellvorgang bezogenen Daten (MSISDN, Preis) werden durch den Registrierungsvorgang bekannte Daten (IMSI) dem Bestelldatensatz zugeordnet, und in der Speichervorrichtung 80 gespeichert.

Der Benutzer kann sich nunmehr mit seiner IMSI durch einfaches Einlegen seines Endgerätes 10 in das Lesegerätes 30 und nachfolgendes Auslesen der IMSI, wie in den obigen Beispielen geschildert, identifizieren. Die IMSI wird mit den Benutzerkennungen der gespeicherten Bestelldatensätze verglichen. Der Bestelldatensatz, dessen IMSI mit der eingelesenen IMSI übereinstimmt, wird nach der Veranstaltung an den Netzbetreiber übermittelt. Die Abrechnung bzw. Rechnungsstellung erfolgt sodann über die bekannten Verfahren zur Abrechnung bzw. Rechnungsstellung, d.h. der Preis für den Besuch der Veranstaltung wird dem Benutzer im Rahmen seiner Telefonrechnung in Rechnung gestellt.

Durch den Registrierungsvorgang entfällt also die Notwendigkeit eines zeitnahen Zugangs zu den Zuordnungstabellen des Mobilfunkbetreibers. Umgekehrt entfällt bei Vorhandensein eines solchen synchronen Zugangs die Notwendigkeit einer vorherigen Registrierung, da auf die für den Identifizierungsvorgang benötigte Zuordnung MSISDN-IMSI augenblicklich zugegriffen werden kann.

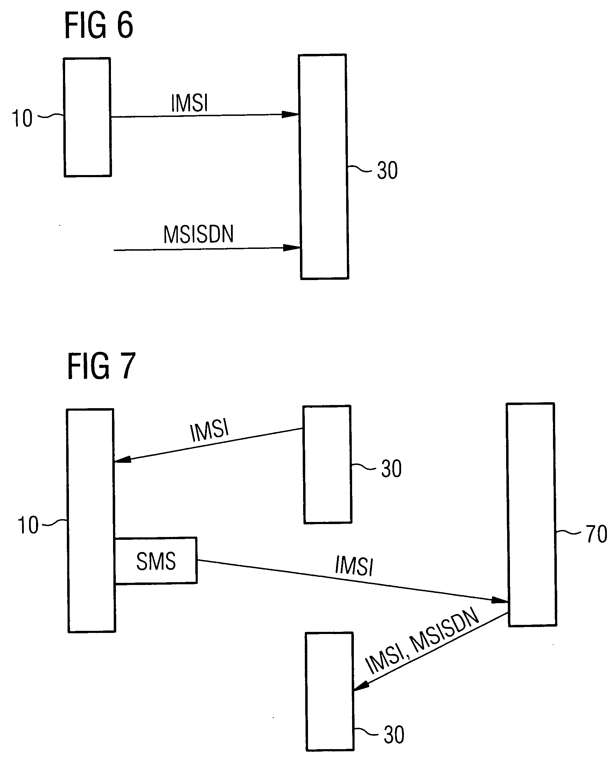

Für eine Registrierung sind unterschiedliche Verfahren möglich. Beispielhafte Ablaufdiagramme hierfür sind in den Figuren 6 und 7 dargestellt.

In einem Ausführungsbeispiel F6, das in Fig. 6 gezeigt ist, steht dem Verkäufer der Zutrittsberechtigung (herkömmlich: dem Verkäufer der Eintrittskarte) ein Lesegerät 30 wie beschrieben zur Verfügung. Der Benutzer legt sein Endgerät 10 in das Lesegerät 30 ein. Die IMSI wird nun von Endgerät 10 an das Lesegerät 30 nach einem der bereits beschriebenen Verfahren F3, F4 oder F5 übermittelt. Parallel dazu gibt der Nutzer über eine Tastatur, beispielsweise die Tastatur 60 aus einer der beiden Figuren 1 oder 2, seine MSISDN dem Lesegerät 30 bekannt. Die Steuereinheit 100 veranlasst die Speicherung der IMSI sowie der MSISDN in Zuordnung zueinander in der Speichereinrichtung 80.

Nach dem alternativen Ausführungsbeispiel F7, in der Fig. 7 gezeigt, empfängt das Lesegerät 30 die IMSI des mobilen Endgerätes 10 (nicht gezeigt) und sendet diese über eine SMS-Nachricht an das Endgerät 10 zurück. Der Benutzer entnimmt das Endgerät 10 aus dem Lesegerät 30 und leitet die SMS-Nachricht über das Mobilfunknetz 70 weiter. Dieses trägt automatisch als Absender die MSISDN des Benutzers ein. Die Weiterleitung erfolgt zweckmäßigerweise und wenigstens mittelbar an die Steuereinheit 100 des Lesegerätes 30, wobei die IMSI und die MSISDN aus der weitergeleiteten SMS-Nachricht entnommen werden, und durch die Steuereinheit 100 schließlich in der Speichereinrichtung 80 in Zuordnung zueinander gespeichert werden.

Eine weitere Ausgestaltung des Registrierungsverfahrens F7 vermeidet die Versendung der IMSI über die weitergeleitet SMS-Nachricht. Stattdessen wird eine innerhalb des Lesegerätes 30 erzeugte und durch dieses eindeutig auf die IMSI abbildbare Kennung an das mobile Endgerät übertragen. Da die Weiterleitung der SMS wieder an das Lesegerät zurück erfolgt, kann dieses die Rückabbildung der Kennung auf die IMSI des Benutzers nach dem Eintreffen der weitergeleiteten SMS-Nachricht unmittelbar durchführen.

Bei einer weiteren, alternativen Ausführungsform des Registrierungsvorganges (nicht gezeigt) liest der Benutzer die IMSI aus seiner SIM-Karte aus, etwa mittels geeigneter Eingaben an der Eingabevorrichtung des Endgerätes, oder über die Anzeigeeinrichtung eines PCs oder eines PDAs, der mit dem Endgerät für Zwecke der Übertragung der IMSI verbunden wird. Der Benutzer sendet die so ermittelte IMSI mittels SMS an das Lesegerät 30, wobei bei der Weiterleitung der das Mobilfunknetz 70 die MSISDN des Benutzers in die SMS-Nachricht eingefügt wird, an das Lesegerät, welches die Speicherung des Tupels MSISDN-IMSI in der Speichervorrichtung 80 veranlasst. Der Vorteil dieses Verfahrens besteht darin, dass der Benutzer für den Registrierungsvorgang nicht bei einem Lesegerät vor Ort persönlich erscheinen muss.

Entsprechend dem ersten Teil des zuletzt geschilderten Registrierungsvorganges ist auch eine weitere Ausführungsform eines Identifizierungsvorganges denkbar, bei dem der Benutzer die IMSI durch aktives Schicken an das Lesegerät übermittelt. Beispielsweise kann der Benutzer die IMSI aus dem Endgerät über einen PC oder einen PDA, wie oben geschildert, auslesen. Der Benutzer sendet zur Identifizierung dann die so ermittelte IMSI mittels SMS über den Abschirmbereich 35 und die Empfangseinrichtung an das Lesegerät 30.

Die hier geschilderten Beispiele stellen zweckmäßige Ausführungsformen der Erfindung dar. Im Rahmen des erfindungsgemäßen Grundgedankens sind durch fachmännisches Handeln weitere Ausführungsformen denkbar, ohne dass der Bereich der Erfindung verlassen wird. Beispielsweise bestehen eine Reihe technischer Möglichkeiten, zwischen dem Endgerät 10 des Benutzers und dem Lesegerät 30 zusätzliche Informationen auszutauschen. So kann etwa das Lesegerät mittels einer Flash-SMS-Nachricht, einer Übertragung über den allgemeinen Datenübertragungskanal (Cell Broadcast) oder WAP-Push nach der WAP-Technologie Nachrichten auf einer Anzeigeeinheit des Endgerätes 10 ausgeben, die die Auslesung der Benutzerkennung (IMSI) betreffen.

Ein einfach und kostengünstig aufgebautes Lesegerät muss daher nicht über eine eigene Anzeigeeinheit 130 verfügen. Auch die Tastatur 60 oder eine entsprechende Eingabeeinheit ist entbehrlich: Der Benutzer kann für das Lesegerät bestimmte Daten am Endgerät eingeben. Hierzu kann zwischen dem Lesegerät und dem Endgerät eine Verbindung über die emulierte Luftschnittstelle zur Übermittlung von Daten (GSM-Datendienste) aufgebaut werden. Eine Eingabe von Daten an einer Eingabeeinheit des Endgerätes wird dann über diese Verbindung an das Lesegerät übermittelt. Alternativ können Benutzereingaben am Endgerät auch über SMS-Nachrichten, die WAP-Technologie, oder über zwischen dem Endgerät und dem Lesegerät ausgetauschte Signalisierungsnachrichten ausgetauscht werden.

Um den unberechtigten Gebrauch des Endgerätes durch Dritte zu verhindern, kann zusätzlich die Eingabe eines Kennwortes verlangt werden. Die Eingabe des Kennwortes kann etwa an der Tastatur 60 des Lesegerätes erfolgen, oder am Endgerät.

In der Speichervorrichtung 80 können IMSI-Listen gespeichert sein, die die IMSIs gesperrter Benutzer, bzw. gesperrter SIM-Karten enthalten. Diese Listen können vom Mobilfunkbetreiber übermittelt werden. Das kann insbesondere dann sinnvoll sein, wenn kein synchroner oder zeitnaher Zugriff auf die Datenbasis des Mobilfunknetzes 70 erfolgt, d.h. bei Identifizierungen mit vorausgegangener Registrierung. Sind die Benutzer des Lesegerätes registriert, können solche Listen statt der IMSI oder zusätzlich dazu die MSISDN enthalten. Bei Einlesen einer IMSI wird diese mit den IMSIs der Liste verglichen, bzw. die aus der Registrierungszuordnung erhaltene MSISDN wird mit den MSISDNs der Liste verglichen. Ist eine IMSI bzw. eine MSISDN in der Liste enthalten, kann ein Signal ausgegeben werden.

In Reaktion auf ein erfolgreiches/fehlerhaftes Auslesen der Benutzerkennüng, bspw. der IMSI, aus dem Endgerät kann ein dementsprechendes optisches und/oder akustisches Signal auf einer entsprechenden Einrichtung des Lesegerätes oder auch auf einer Anzeigeeinrichtung des Endgerätes ausgegeben werden.

Das für Off-Site-Identifizierungen verwendete Identifizierungsdatum muss nicht die MSISDN sein, es kann sich bspw. auch um eine WAP-Benutzerlogin handeln, welches ebenfalls in den benutzerbezogenen Datenbasis des Mobilfunk-Betreibers in Zuordnung zu der IMSI des Benutzers vorliegt.

Die in den Beispielen als in dem Lesegerät befindlich geschilderten Einrichtungen, wie etwa die Speichereinrichtung 80 oder die Tastatur 60 können auch abgesetzt ausgebildet sein. Einrichtungen des Lesegerätes, so etwa die Speichereinrichtung 80, können auch durch mehrere Lesegeräte gemeinsam genutzt werden.
Alle Beispiele haben sich auf GSM-Netze und -Endgeräte bezogen. Stattdessen hätten auch etwa UMTS-Netze und - Endgeräte beispielhaft herangezogen werden können. Die Funknetze der Mobilfunknetze sowie die Endgeräte und dementsprechend auch die Lesegeräte können jedoch ebenso auf weiteren Technologien basieren, wie etwa Bluetooth, IrDA oder WLAN.

Die Erfindung ist nicht auf die geschilderten Ausführungsbeispiele beschränkt, sondern weiterhin in einer Vielzahl von Abwandlungen möglich, die im Rahmen fachgemäßen Handelns liegen.

## Patentansprüche

1. Verfahren zur Identifizierung eines Benutzers mittels eines mobilen Endgerätes,
**dadurch gekennzeichnet, dass** das Endgerät durch ein Lesegerät von Mobilfunknetzen, die in der Umgebung des Lesegerätes verfügbar sind, abgeschirmt wird, das Lesegerät mindestens einen Teil der Funktionalität einer Basisstation eines Mobilfunknetzes gegenüber dem Endgerät emuliert und das Endgerät eine Benutzerkennung an das Lesegerät übermittelt.

2. Verfahren nach Anspruch 1,
**dadurch gekennzeichnet, dass** das Endgerät von Mobilfunknetzen abgeschirmt wird, indem mindestens seine Antenne in ein abgeschirmtes Raumvolumen, nämlich einen Abschirmbereich, des Lesegerätes eingebracht wird und
das Lesegerät die Basisstation gegenüber dem Endgerät emuliert, indem eine Sendeeinrichtung des Lesegerätes gemäß der Spezifikation des Mobilfunknetzes mit einer im Vergleich zu Basisstationen des Mobilfunknetzes sehr geringen Leistung in den Abschirmbereich hinein sendet.

3. Verfahren nach Anspruch 2,
**dadurch gekennzeichnet, dass** das Lesegerät eine Aufforderungsnachricht zur Übermittlung der Benutzerkennung an das Endgerät sendet und das Endgerät die Benutzerkennung in Reaktion auf die Aufforderungsnachricht an das Lesegerät übermittelt.

4. Verfahren nach Anspruch 3,
**dadurch gekennzeichnet, dass**
die Sendeeinrichtung in Reaktion auf das Einbringen des Endgerätes in den Abschirmbereich die Aufforderungsnachricht an das Endgerät auf dem von dem Endgerät benutzten Kanal der Luftschnittstelle des Mobilfunknetzes sendet.

5. Verfahren nach Anspruch 3,
**dadurch gekennzeichnet, dass** die Sendeeinrichtung unabhängig vom Einbringen des Endgerätes in den Abschirmbereich kontinuierlich Aufforderungsnachrichten auf Kanälen der jeweiligen Luftschnittstelle einer Mehrzahl von Mobilfunknetzen sendet.

6. Verfahren nach einem der Ansprüche 4 oder 5,
**dadurch gekennzeichnet, dass** die Basisstation für mindestens ein Mobilfunknetz emuliert wird, das in der Umgebung des Lesegerätes verfügbar ist, wobei dieses durch Messung in der Umgebung des Lesegerätes ermittelt wird.

7. Verfahren nach einem der Ansprüche 3 bis 6,
**dadurch gekennzeichnet, dass**
die Sendeeinrichtung eine Aufenthaltsbereichskennung für das oder jedes Mobilfunknetz ausstrahlt, die sich von der Aufenthaltsbereichskennung dieses Mobilfunknetzes in der Umgebung des Abschirmbereiches unterscheidet.

8. Verfahren nach Anspruch 2,
**dadurch gekennzeichnet, dass**
die Basisstation für ein solches Mobilfunknetz emuliert wird, das in der Umgebung des Lesegerätes verfügbar ist,
die Sendeeinrichtung eine Aufenthaltsbereichskennung für das Mobilfunknetz ausstrahlt, die sich von der Aufenthaltsbereichskennung des Mobilfunknetzes in der Umgebung des Lesegerätes unterscheidet, das Endgerät in Reaktion darauf die Benutzerkennung aussendet, das Lesegerät die von dem Endgerät empfangene Benutzerkennung an Einrichtungen des Mobilfunknetzes weiterleitet und von den Einrichtungen des Mobilfunknetzes eine zweite Benutzerkennung an das Lesegerät übermittelt wird.

9. Verfahren nach Anspruch 2,
**dadurch gekennzeichnet, dass**
die Basisstation für ein solches Mobilfunknetz emuliert wird, das nicht in der Umgebung des Lesegerätes verfügbar ist,
die Sendeeinrichtung eine Aufenthaltsbereichskennung für das Mobilfunknetz ausstrahlt und das Endgerät in Reaktion darauf die Benutzerkennung aussendet.

10. Verfahren nach Anspruch 9,
**dadurch gekennzeichnet, dass** das Endgerät neben der Benutzerkennung eine Gerätekennung des Endgerätes an das Lesegerät übermittelt.

11. Verfahren nach einem der vorhergehenden Ansprüche,
**dadurch gekennzeichnet, dass** vom Endgerät an das Lesegerät übermittelte Informationen in einer Speichereinrichtung gespeichert werden.

12. Verfahren nach Anspruch 11,
**dadurch gekennzeichnet, dass** in einem Registrierungsvorgang in der Speichereinrichtung solche Identifizierungsdaten, die für andere Verfahren zur Identifizierung des Benutzers herangezogen werden, insbesondere eine Mobilfunk-Rufnummer des Benutzers, in Zuordnung zu der Benutzerkennung gespeichert werden.

13. Verfahren nach Anspruch 12,
**dadurch gekennzeichnet, dass** zur Registrierung eine Nachricht, die die Benutzerkennung enthält, vom Endgerät über das Mobilfunknetz an das Lesegerät übermittelt wird, wobei das Mobilfunknetz der Nachricht Identifizierungsdaten hinzufügt, und
die durch die Nachricht an das Lesegerät übermittelten Identifizierungsdaten in Zuordnung zu der Benutzerkennung gespeichert werden.

14. Verfahren nach Anspruch 12,
**dadurch gekennzeichnet, dass**
zur Registrierung das Lesegerät aus der ausgelesenen Benutzerkennung eine eindeutig der Benutzerkennung zugeordnete Registrierungskennung erzeugt und
eine Nachricht, die die Registrierungskennung enthält, außerhalb des Mobilfunknetzes an das Endgerät übermittelt, das Endgerät aus dem Abschirmbereich entnommen wird,
die Nachricht vom Endgerät über das Mobilfunknetz zurück an das Lesegerät übermittelt wird, wobei das Mobilfunknetz der Nachricht Identifizierungsdaten hinzufügt und
die durch die Nachricht an das Lesegerät übermittelten Identifizierungsdaten in Zuordnung zu der Benutzerkennung gespeichert werden.

15. Verfahren nach einem der vorhergehenden Ansprüche,
**dadurch gekennzeichnet, dass**
vom Lesegerät an das Endgerät außerhalb des Mobilfunknetzes Informationen übermittelt und diese auf einer Anzeigeeinheit des Endgerätes ausgegeben werden.

16. Verfahren nach einem der vorhergehenden Ansprüche,
**dadurch gekennzeichnet, dass** Informationen, insbesondere Identifizierungsdaten, an einer Eingabeeinheit des Endgerätes oder über eine mit dem Endgerät verbundene Eingabevorrichtung eingegeben und außerhalb des Mobilfunknetzes vom Endgerät an das Lesegerät übermittelt werden.

17. Verfahren nach einem der vorhergehenden Ansprüche,
**dadurch gekennzeichnet, dass** der verfahrensgemäße Gebrauch des mobilen Endgerätes durch die Eingabe eines Kennwortes, einer PIN oder einer vergleichbaren Authentifizierung sicherheitswirksam geschützt wird.

18. Verfahren nach einem der vorhergehenden Ansprüche,
**dadurch gekennzeichnet, dass** die über das Endgerät empfangene Benutzerkennung mit einer Liste von in der Speichereinrichtung gespeicherten Benutzerkennungen verglichen wird, und ein Signal ausgegeben wird, das das Ergebnis des Vergleichs angibt.

19. Lesegerät zur Durchführung eines Verfahrens nach einem der vorhergehenden Ansprüche,
**gekennzeichnet durch** ein Gehäuse, das zur Einbringung eines mobilen Endgerätes und mit einem Abschirmbereich zur Abschirmung von hochfrequenten elektromagnetischen Feldern ausgebildet ist, eine innerhalb des Abschirmbereiches wirkende Sende-/Empfangseinheit zur Kommunikation mit dem eingebrachten Endgerät und eine Steuereinheit zur Steuerung der Sende-/Empfangseinheit und zur Emulation einer Basisstation eines Mobilfunknetzes gegenüber dem eingebrachten Endgerät.

20. Lesegerät nach Anspruch 19,
**gekennzeichnet durch** mit der Steuereinheit verbundene Erfassungsmittel, die in Reaktion auf das Einbringen eines Endgerätes in den Abschirmbereich ein Signal an die Steuereinheit übermitteln.

21. Lesegerät nach Anspruch 19 oder 20,
**dadurch gekennzeichnet, dass** die Steuereinheit sowie die Sende-/Empfangseinheit zur Kommunikation mit dem eingebrachten Endgerät gemäß einer Mehrzahl von Mobilfunknetz-Spezifikationen ausgebildet sind.

22. Lesegerät nach einem der Ansprüche 19 bis
21, **dadurch gekennzeichnet, dass** die Steuereinheit sowie die Sende-/Empfangseinheit eine Mehrzahl von Basisstationen einer Mehrzahl von Mobilfunknetzen emulieren.

23. Lesegerät nach einem der Ansprüche 19 bis 22,
**dadurch gekennzeichnet, dass** die Steuereinheit mit Einrichtungen des oder jedes Mobilfunknetzes für Datenübertragungszwecke verbunden ist, das in der Umgebung des Abschirmbereiches verfügbar ist.

24. Lesegerät nach einem der Ansprüche 19 bis 23,
**gekennzeichnet durch** eine mit der Steuereinheit verbundene Eingabevorrichtung zur Eingabe von Informationen **durch** den Benutzer und eine mit der Steuereinheit verbundene Ausgabevorrichtung zur Ausgabe von Signalen, die die Identifizierung und/oder Registrierung des Benutzers betreffen.

25. Anordnung mit einem Lesegerät nach einem der Ansprüche 19 bis 24,
**dadurch gekennzeichnet, dass** eine mit der Steuereinheit für Datenübertragungszwecke verbundene Speichereinrichtung zur Speicherung wenigstens der vom Endgerät übermittelten Benutzerkennung vorgesehen ist.

26. Anordnung mit einem Lesegerät nach einem der Ansprüche 19 bis 25,
**gekennzeichnet durch** eine mit der Steuereinheit verbundene Netzerkennungseinrichtung, die zur Erkennung verfügbarer Mobilfunknetze in der Umgebung des Lesegerätes ausgebildet ist.
